# DEMANDE DE BREVET EUROPEEN

(11) **EP 2 953 047 A1**
(43) Date de publication de la demande: **09.12.2015**
(21) Numéro de dépôt: 15305822.7
(22) Date de dépôt: 29.05.2015
(51) Int. Cl.: G06F 21/34, G06F 21/74

(54) **APPAREIL ÉLECTRONIQUE COMPRENANT UNE ENTITÉ ÉLECTRONIQUE SÉCURISÉE ET PROCÉDÉ MIS EN OEUVRE DANS UN TEL APPAREIL ÉLECTRONIQUE**

(30) Priorité: 06.06.2014 FR 1455186
(71) Demandeur: OBERTHUR TECHNOLOGIES, 92700 Colombes (FR)
(72) Inventeur: Chamley, Olivier, 92700 Colombes (FR); Bousquet, Nicolas, 92700 Colombes (FR)
(74) Mandataire: Orsini, Fabienne

(57) **Abrégé**

L'invention concerne un appareil électronique (10) comprenant un premier processeur et une entité électronique sécurisée (40) équipée d'un second processeur, l'appareil électronique (10) étant conçu pour fonctionner au moyen de l'exécution par le premier processeur d'un système d'exploitation de confiance (30).

Un élément (20) situé en dehors de l'entité électronique sécurisée (40) et distinct du système d'exploitation de confiance (30) est conçu pour déclencher l'exécution d'une application (42) par le second processeur ; l'application exécutée (42) par le second processeur est conçue pour demander la mise en oeuvre d'un service du système d'exploitation de confiance (30).

Un procédé mis en oeuvre dans un tel appareil électronique est également décrit.

## Description

### DOMAINE TECHNIQUE AUQUEL SE RAPPORTE L'INVENTION

La présente invention concerne la sécurisation des appareils électroniques.

Elle concerne plus particulièrement un appareil électronique comprenant un premier processeur et une entité électronique sécurisée équipée d'un second processeur, l'appareil électronique étant conçu pour fonctionner au moyen de l'exécution par le premier processeur d'un système d'exploitation de confiance. La présente invention concerne également un procédé mis en oeuvre dans un tel appareil électronique.

L'invention s'applique particulièrement avantageusement dans le cas où un système d'exploitation polyvalent est également exécuté au sein de l'appareil électronique.

### ARRIERE-PLAN TECHNOLOGIQUE

On connaît les appareils électroniques tels que définis ci-dessus, dans lesquels le fonctionnement est sécurisé d'une part par l'utilisation d'un système d'exploitation de confiance (ou *"Trusted OS"* selon la dénomination anglo-saxonne), qui permet de fournir un environnement d'exécution de confiance (ou TEE pour *"Trusted Execution Environment"*) dans lequel certaines applications seulement peuvent être installées et exécutées, et d'autre part par l'utilisation d'une entité électronique sécurisée pour la mise en oeuvre de traitements qui requièrent un niveau de sécurité élevé, tels que des traitements cryptographiques de données.

De tels appareils électroniques comprennent en général en outre des éléments non sécurisés, par exemple un système d'exploitation polyvalent (ou *"Rich OS"* selon la dénomination anglo-saxonne) exécuté au sein de l'appareil électronique ; dans le cadre de leur fonctionnement, ces éléments non-sécurisés peuvent avoir à faire appel à des fonctionnalités sécurisées.

On prévoit classiquement dans ce cas que la fonctionnalité sécurisée requise par l'élément non sécurisé soit pilotée par une application mise en oeuvre dans le cadre du système d'exploitation de confiance, à charge pour cette application de demander des traitements (typiquement cryptographiques) à l'entité électronique sécurisée lorsque cela est nécessaire.

On comprend que cette solution nécessite toutefois, pour effectuer le service recherché par l'utilisateur, l'installation d'applications dans l'élément non sécurisé, dans l'environnement d'exécution de confiance et dans l'entité électronique sécurisée.

### OBJET DE L'INVENTION

Dans ce contexte, la présente invention propose un appareil électronique tel que défini ci-dessus, caractérisé en ce qu'un élément situé en dehors de l'entité électronique sécurisée et distinct du système d'exploitation de confiance est conçu pour déclencher l'exécution d'une application par le second processeur et en ce que l'application exécutée par le second processeur est conçue pour demander la mise en oeuvre d'un service du système d'exploitation de confiance.

Ainsi, l'application, dont l'exécution est déclenchée par l'élément non-sécurisé, pourra piloter la mise en oeuvre de la fonctionnalité sécurisée, en faisant appel à des services du système d'exploitation de confiance lorsque cela est nécessaire, par exemple lorsque des ressources de l'appareil électronique gérées par le système d'exploitation de confiance doivent être utilisées dans le processus piloté par le second processeur.

Seuls des services de base offerts par le système d'exploitation de confiance seront donc utilisés et il n'est donc plus nécessaire d'installer dans l'environnement d'exécution de confiance une application dédiée à la mise en oeuvre du service recherché par l'utilisateur.

En outre, la fonctionnalité sécurisée est pilotée à partir de l'entité électronique sécurisée qui offre un niveau de sécurité encore supérieur à celui réalisé par l'environnement d'exécution de confiance.

Selon une première possibilité, l'élément distinct est un système d'exploitation polyvalent mis en oeuvre au sein de l'appareil électronique. Un tel système d'exploitation polyvalent peut être conçu pour être exécuté par le premier processeur.

On peut prévoir comme expliqué dans la description qui suit des moyens de basculement du fonctionnement entre un fonctionnement basé sur le système d'exploitation polyvalent et un fonctionnement basé sur le système d'exploitation de confiance.

En variante, l'appareil électronique peut comprendre un troisième processeur et le système d'exploitation polyvalent peut être conçu pour être exécuté par ce troisième processeur.

Selon une seconde possibilité de réalisation, l'élément distinct est un module de l'appareil électronique, équipé par exemple lui aussi d'un processeur, par exemple un module de communication de l'appareil électronique.

On remarque que l'élément distinct peut être conçu pour commander directement au second processeur le déclenchement de l'exécution de l'application, ou être conçu pour émettre une commande de déclenchement de l'exécution de l'application à destination du système d'exploitation de confiance, le système d'exploitation de confiance étant alors conçu pour commander l'exécution de l'application par le second processeur. Dans ce dernier cas, le rôle du système d'exploitation de confiance est limité à la transmission de l'instruction de déclenchement au second processeur.

Les moyens de basculement mentionnés plus haut peuvent alors être conçus pour basculer du fonctionnement basé sur le système d'exploitation polyvalent au fonctionnement basé sur le système d'exploitation de confiance à l'émission de la commande de déclenchement.

Le service dont la mise en oeuvre est demandée par le second processeur inclut par exemple la mise en oeuvre d'une fonctionnalité d'un périphérique (par exemple une interface homme-machine) de l'appareil électronique.

Ce service peut inclure un retour d'information (tel qu'un affichage ou l'émission d'un signal sonore, ou encore l'activation d'un vibreur) sur une interface homme-machine de l'appareil électronique et/ou la réception d'une information d'identification (par exemple une information d'authentification) de l'utilisateur.

L'invention propose également un procédé mis en oeuvre dans un appareil électronique comprenant un premier processeur et une entité électronique sécurisée équipée d'un second processeur, l'appareil électronique étant conçu pour fonctionner au moyen de l'exécution par le premier processeur d'un système d'exploitation de confiance, comprenant les étapes suivantes :
- déclenchement, par un élément situé en dehors de l'entité électronique sécurisée et distinct du système d'exploitation de confiance, de l'exécution d'une application par le second processeur ;
- demande, par l'application exécutée par le second processeur, de la mise en oeuvre d'un service du système d'exploitation de confiance.

Les caractéristiques optionnelles proposées ci-dessus pour l'appareil électronique peuvent également s'appliquer à un tel procédé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un système dans lequel est mise en oeuvre l'invention ;
- la figure 2 représente un premier exemple d'un procédé d'échange de données entre les éléments du système de la figure 1, conformément aux enseignements de l'invention ;
- la figure 3 représente un second exemple d'un procédé d'échange de données dans un système du type de celui de la figure 1, conformément aux enseignements de l'invention ; et
- la figure 4 représente un autre exemple de système dans lequel peut être mise en oeuvre l'invention ;
- la figure 5 représente un exemple de procédé d'échange de données entre les éléments du système de la figure 4.

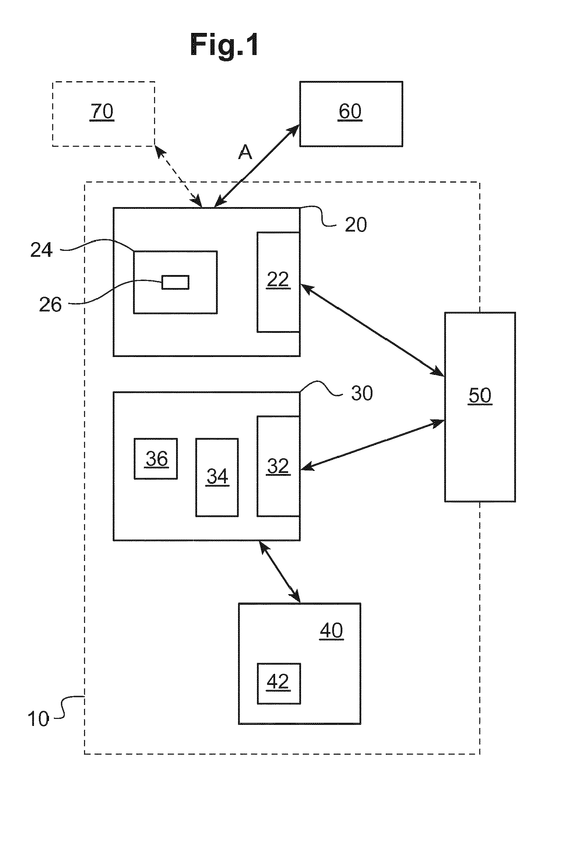

La figure 1 représente schématiquement les éléments principaux d'un système dans lequel est mise en oeuvre l'invention.

Ce système comprend un appareil électronique 10, ici un terminal (par exemple de type téléphone intelligent ou *"smartphone"* selon la dénomination anglo-saxonne), dont le fonctionnement est basé sur l'utilisation de deux systèmes d'exploitation distincts : un système d'exploitation polyvalent 20 (ou *"Rich OS"* selon l'appellation anglo-saxonne) et un système d'exploitation de confiance 30 (ou *"Trusted OS"*), parfois dénommé système d'exploitation sécurisé (*"Secure* OS").

Le système d'exploitation polyvalent 20 permet le téléchargement, l'installation et l'exécution d'applications avec une grande liberté pour l'utilisateur.

Au contraire, dans le cadre du fonctionnement de l'appareil électronique 10 sur la base du système d'exploitation de confiance 30, les possibilités de téléchargement et d'installation d'applications sont limitées (par exemple à des applications ayant reçu une certification particulière) de sorte que l'utilisation du système d'exploitation de confiance permet de créer au sein de l'appareil électronique 10 un environnement d'exécution de confiance (ou TEE pour *"Trusted Execution Environment"*)*.*

Cet environnement d'exécution de confiance offre par exemple un niveau de sécurité conforme aux critères communs EAL (pour *"Evaluation Assurance Level"*)*,* correspondant à la norme ISO 15408, avec un niveau compris entre 2 et 7, ou à la norme FIPS (pour *"Federal Information Processing Standard"*) 140-2.

Dans l'exemple décrit ici, le système d'exploitation polyvalent 20 et le système d'exploitation de confiance 30 sont exécutés par un même processeur de l'appareil électronique, par exemple un processeur d'un système sur puce (ou SoC pour *"System on Chip"*)*.* Outre le processeur, un tel système sur puce comprend d'autres éléments électroniques ayant diverses fonctionnalités, notamment une ou plusieurs mémoires (par exemple une mémoire morte - ou ROM pour *"Read Only Memory"*, une mémoire vive - ou RAM pour *"Random Access Memory" -* et une mémoire non-volatile réinscriptible, par exemple de type EEPROM pour *"Electrically Erasable and Programmable Read Only Memory"*) ; une partie d'au moins une de ces mémoires peut être réservée au système d'exploitation de confiance 30 (c'est-à-dire que cette partie de mémoire peut être lue et/ou écrite seulement par le système d'exploitation de confiance 30).

On prévoit dans ce cas, comme mentionné ci-après, un processus de basculement entre le fonctionnement de l'appareil électronique 10 sur la base du système d'exploitation polyvalent 20 et le fonctionnement de l'appareil électronique 10 sur la base du système d'exploitation de confiance 30 de sorte que l'appareil électronique 10 fonctionne à chaque instant sur la base d'un seul des deux systèmes d'exploitation 20, 30.

En variante, on pourrait prévoir que le système d'exploitation polyvalent 20 et le système d'exploitation de confiance 30 soient respectivement exécutés deux processeurs dédiés, par exemple tous deux embarqués sur un système sur puce.

L'appareil électronique 10 comprend également une entité électronique sécurisée 40 équipée d'un processeur ; l'entité électronique sécurisée 40 est par exemple un circuit intégré sécurisé (ou SE pour *"Secure Element"*), éventuellement soudé dans l'appareil électronique 10 (alors dénommé eSE pour *"embedded Secure Element"*), ou une carte à microcircuit (ou UICC pour "Universal *Integrated Circuit Card"*).

Une telle entité électronique sécurisée est par exemple conforme aux critères communs EAL (pour *"Evaluation Assurance Level*"), correspondant à la norme ISO 15408, avec un niveau compris entre 2 et 7, ou à la norme FIPS (pour *"Federal Information Processing Standard"*) 140-2.

Les commandes émises à destination de cette entité électronique 40 sont par exemple de type APDU (voir par exemple ci-dessous l'étape E13). Comme représenté schématiquement en figure 1, l'entité électronique 40 peut elle aussi émettre des commandes à destination du système d'exploitation de confiance 30, par exemple des commandes de type STK (pour *"SIM ToolKit"*)*.*

L'appareil électronique 10 comprend enfin une interface utilisateur ou interface homme-machine (IHM) 50 (ou encore UI pour *"User Interface"*), par exemple un écran tactile, qui permet d'afficher des informations destinées à l'utilisateur et de recevoir des instructions ou informations de l'utilisateur, ici lorsque l'utilisateur touche des éléments (tels que des boutons virtuels) affichés sur l'écran tactile.

En variante, l'interface utilisateur pourrait utiliser d'autres types de dispositif d'entrée-sortie afin d'échanger des informations entre l'appareil électronique et l'utilisateur, comme par exemple un haut-parleur, un microphone ou un capteur biométrique.

Le système présenté à la figure 1 comprend un serveur distant 60 (appartenant par exemple à un site marchand) qui peut échanger des données avec l'appareil électronique 10 par des moyens de communication représentés schématiquement par la flèche A, qui peuvent inclure notamment un réseau de téléphonie (ici un réseau de téléphonie mobile) et un réseau de données, par exemple un réseau informatique tel que le réseau Internet.

Le système de la figure 1 peut éventuellement comprendre en outre un serveur bancaire 70, c'est-à-dire un serveur géré par une banque, généralement une banque dans laquelle l'utilisateur est titulaire d'un compte bancaire.

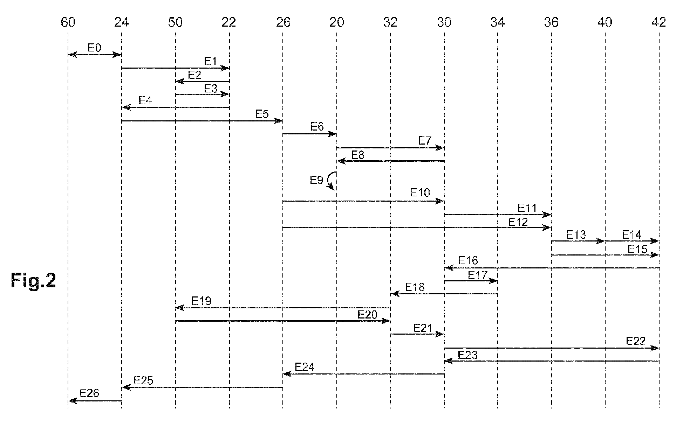

La figure 2 représente un premier exemple de procédé d'échange de données entre les éléments du système de la figure 1, conformément aux enseignements de l'invention.

Ce procédé commence à l'étape E0 par l'échange de données entre le serveur distant 60 et un navigateur 24 (par exemple un navigateur Internet ou *"web browser"* selon l'appellation anglo-saxonne) exécuté par le processeur de l'appareil électronique 10 dans le cadre de l'environnement défini par le système d'exploitation polyvalent 20.

Les données reçues par le navigateur 24 sont alors affichées sur l'écran tactile de l'appareil électronique 10. Pour ce faire, le navigateur 24 fait appel à l'étape E1 à un module de gestion de l'interface homme-machine (ou IHM) 22. Comme représenté en figure 1, un tel module de gestion de l'IHM 22 fait partie des services offerts par le système d'exploitation polyvalent 20.

Le module de gestion de l'IHM 22 commande alors à l'étape E2 l'affichage requis sur l'écran tactile 50.

L'utilisateur sélectionne alors (en touchant par exemple un bouton virtuel sur l'écran tactile 50) une fonctionnalité (par exemple un paiement) qui nécessite d'être mise en oeuvre dans un contexte sécurisé.

Cette sélection (en pratique le positionnement du doigt de l'utilisateur à une position donnée sur l'écran tactile 50) est transmise au module de gestion de l'IHM 22 à l'étape E3, qui la relaie au navigateur 24 à l'étape E4.

Du fait de cette sélection, le navigateur 24 commande à l'étape E5 la mise en oeuvre d'un module 26 dédié à cette fonctionnalité, par exemple un module d'extension (ou plugiciel, ou encore *"plug-in"* selon l'appellation anglo-saxonne). Le navigateur 24 peut alors communiquer au module dédié 26 des informations associées à la fonctionnalité demandée, ici des informations de paiement telles que le montant de la transaction, un identifiant du commerçant, la date de la transaction et un code produit.

À l'étape E6, le module dédié 26 (alors exécuté par le processeur de l'appareil électronique 10) demande alors au système d'exploitation actif (en l'occurrence le système d'exploitation polyvalent 20) le basculement vers un fonctionnement de l'appareil électronique 10 basé sur l'autre système d'exploitation possible (ici le système d'exploitation de confiance 30), c'est-à-dire vers un fonctionnement dans un environnement d'exécution de confiance (ou TEE).

Le système d'exploitation polyvalent 20 commande ainsi à l'étape E7 le lancement du système d'exploitation de confiance 30 ; le système d'exploitation de confiance 30 accuse réception à l'étape E8, ce qui provoque la fermeture du système d'exploitation polyvalent 20 à l'étape E9. L'appareil électronique 10 fonctionne alors sur la base du système d'exploitation de confiance 30.

Le module dédié 26 peut alors envoyer au système d'exploitation de confiance 30 une commande de sélection d'une application de confiance 36 (ou TA pour *"Trusted Application",* parfois *"trustlet*") exécutable par le processeur de l'appareil électronique 10 lors de son fonctionnement basé sur le système d'exploitation de confiance 30 (étape E10).

Cette commande de sélection est par exemple accompagnée d'un identifiant de l'application de confiance 36, tel qu'un identifiant universel unique (ou UUID pour *"Universal Unique IDentifier*")*.*

Le système d'exploitation de confiance 30 sélectionne ainsi à l'étape E11 l'application de confiance 36 demandée (c'est-à-dire en pratique que le système d'exploitation de confiance 30 lance l'exécution de l'application de confiance 36 par le processeur de l'appareil électronique 10).

Le module dédié 26 peut alors envoyer à l'application de confiance 36 les informations associées à la fonctionnalité demandée par l'utilisateur (ici les informations de paiement) lors d'une étape E12.

L'application de confiance 36 commande alors le lancement d'un applet 42 au sein de l'entité électronique sécurisée 40. Pour ce faire, à l'étape E13, l'application de confiance 36 envoie à l'entité électronique sécurisée 40 une commande de sélection, accompagné par un identifiant de l'applet 42 (ou AID pour *"Application IDentifier*")*.* Cette commande est par exemple une commande de type APDU (pour *"Application Protocol Data Unit*"). L'entité électronique sécurisée 40 (précisément son système d'exploitation exécuté par le processeur de l'entité électronique sécurisée 40) lance alors l'exécution, par le processeur de l'entité électronique sécurisée 40, de l'applet ainsi identifié 42 (étape E14).

L'application de confiance 36 peut alors envoyer les informations associées à la fonctionnalité demandée par l'utilisateur (ici les informations de paiement) à l'applet 42 lors d'une étape E15.

Avant d'effectuer la validation du paiement par l'entité électronique sécurisée (comme décrit plus bas), l'applet 42 met en oeuvre un processus d'authentification de l'utilisateur (au moyen de la fourniture par l'utilisateur d'informations d'authentification via l'écran tactile 50) comme décrit à présent.

Pour ce faire, l'applet 42 demande au système d'exploitation de confiance 30 la mise en oeuvre d'un service 34 d'une bibliothèque de services fournis par le système d'exploitation de confiance 30 (étape E16).

Ce service correspond par exemple à l'affichage sur l'écran tactile 50 d'un message demandant à l'utilisateur de saisir un code d'identification (par exemple un code PIN pour *"Personal Identification Number*") et à l'attente d'une saisie du code par l'utilisateur au moyen d'un clavier virtuel de l'écran tactile 50.

En variante, il pourrait s'agir de l'affichage sur l'écran tactile 50 d'un message demandant à l'utilisateur d'identifier des symboles ou des images, éventuellement dans un ordre particulier, ou d'apposer son doigt à un endroit donné sur l'écran tactile 50 afin de détecter une empreinte digitale de l'utilisateur.

Dans ces exemples, le code d'identification, les symboles (ou images) identifiés et l'empreinte digitale forment respectivement les informations d'authentification de l'utilisateur.

De manière générale, des données d'identification de l'utilisateur sont reçues par le système d'exploitation de confiance 30 à travers un périphérique d'entrée (clavier, écran tactile, capteur biométrique, etc.).

Le système d'exploitation de confiance 30 lance alors le service 34 demandé (étape E17). Ce service 34 fait appel à un module de gestion sécurisée de l'IHM 32 (étape E18) qui commande l'affichage demandé sur l'écran tactile 50 (c'est-à-dire dans les exemples mentionnés ci-dessus l'affichage du message demande la saisie d'un code d'authentification ou l'affichage du message demandant l'apposition du doigt) lors d'une étape E19. Un tel module de gestion sécurisée de l'IHM 32 fait partie du système d'exploitation de confiance 30, comme représenté en figure 1.

On pourrait prévoir en variante que l'applet 42 exécuté par le processeur de l'entité électronique sécurisée 40 s'adresse directement au module de gestion sécurisée 32 afin de demander l'affichage sur l'écran tactile 50.

Les informations d'identification ou d'authentification obtenues de l'utilisateur au moyen de l'interface utilisateur 50 (ici l'écran tactile) sont déterminées au niveau du module de gestion sécurisée de l'IHM 32 (étape E20), puis transmises à l'applet 42, éventuellement par l'intermédiaire du système d'exploitation de confiance 30 (étapes E21 et E22).

L'applet 42 peut alors vérifier que les informations d'identification ou d'authentification reçues sont bien celles associées à l'utilisateur (par exemple par comparaison avec des informations mémorisées au sein de l'entité électronique sécurisée 40).

Si l'applet 42 vérifie la correspondance entre les informations d'identification ou d'authentification reçues et celles mémorisées, l'applet 42 prépare un message d'autorisation (par exemple en signant ce message au moyen d'une clé cryptographique mémorisée dans l'entité électronique sécurisée 40) et envoie ce message d'autorisation au système d'exploitation de confiance 30 mis en oeuvre par l'appareil électronique 10 à l'étape E23. (Si la correspondance n'est pas vérifiée, on peut prévoir par exemple que l'applet 42 renvoie un message d'erreur en lieu et place du message d'autorisation.)

Le système d'exploitation de confiance 30 transmet alors le message d'autorisation au module dédié 26 (étape E24). Le message d'autorisation est ainsi repris par le navigateur 24 (étape E25) afin d'être transmis au serveur distant 60 lors d'une étape E26 pour informer le serveur distant 60 de la mise en oeuvre effective de la fonctionnalité demandée par l'utilisateur, ici de la validation du paiement initié par l'utilisateur à l'étape E3.

On remarque que, dans le procédé décrit ci-dessus, toutes les étapes du processus d'identification ou d'authentification de l'utilisateur sont mises en oeuvre par la coopération du système d'exploitation de confiance 30 et de l'entité électronique sécurisée 40. De plus, le processus d'identification ou d'authentification est mis en oeuvre à l'initiative de l'applet 42 exécutée par le processeur de l'entité électronique sécurisée 40, dont le niveau de sécurité est encore supérieur à celui assuré par le système d'exploitation de confiance 30. On s'assure ainsi que le processus d'identification ou d'authentification n'est pas mis en oeuvre par un programme malveillant (ou *"malware*") au moyen duquel un attaquant chercherait à obtenir les informations d'authentification de l'utilisateur.

Le rôle du système d'exploitation de confiance 30 est ainsi limité à l'échange de données avec l'entité électronique sécurisée 40 et à la fourniture de services (en particulier en vue de l'accès à des périphériques de l'appareil électronique 10 tels que l'écran tactile 50) à la demande de l'entité électronique sécurisée 40, sans toutefois piloter le déroulement de la fonctionnalité (par exemple le déroulement de la transaction), ce pilotage étant confié à l'entité électronique sécurisée 40.

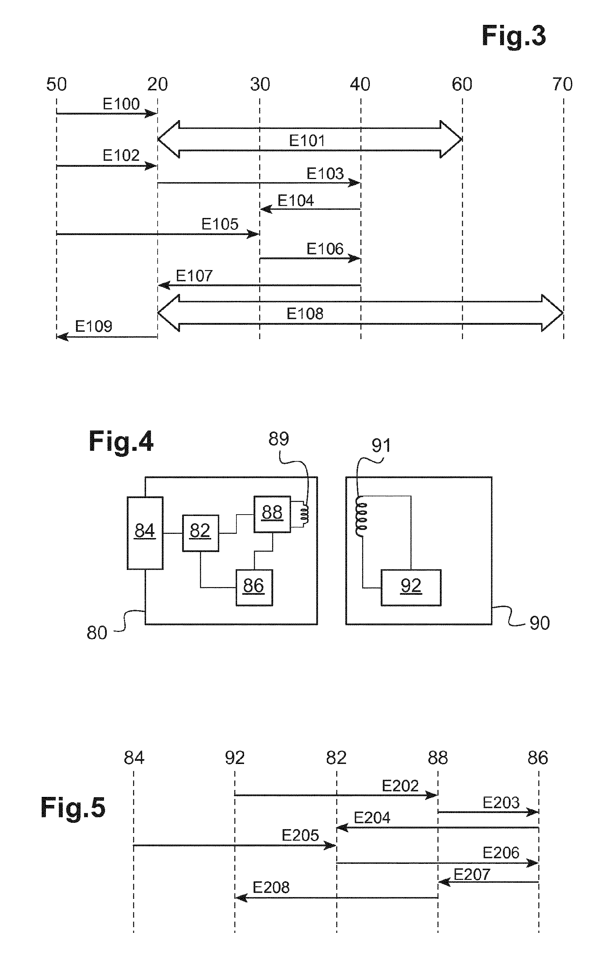

La figure 3 représente un second exemple de procédé d'échange de données dans un système du type de celui de la figure 1, conformément aux enseignements de l'invention.

Ce procédé débute à l'étape E100 par le lancement par l'utilisateur d'une application d'achat en ligne, par exemple par sélection d'une icône associée à cette application d'achat sur l'écran tactile 50. L'application d'achat en ligne est exécutée dans l'environnement créé par le système d'exploitation polyvalent 20. L'application d'achat en ligne fait ainsi notamment appel à des services offerts par le système d'exploitation polyvalent 20.

L'application d'achat en ligne accède alors à l'étape E101 à du contenu distant mémorisé dans le serveur distant 60 (par exemple en faisant appel à un service dédié du système d'exploitation polyvalent 20 et à travers les moyens de communication représentés par la flèche A en figure 1). Ce contenu distant est affiché sur l'écran tactile 50 (étape d'affichage non représentée en figure 3) afin de permettre par exemple à l'utilisateur de sélectionner un produit qu'il souhaite acheter, par exemple en touchant une icône affichée à côté d'une image du produit sur l'écran tactile 50.

Une fois le produit sélectionné par l'utilisateur (étape de sélection non représentée en figure 3), l'utilisateur lance le paiement du produit sélectionné par une action particulière sur l'écran tactile 50 (étape E102), par exemple en touchant un bouton virtuel de paiement affiché sur l'écran tactile 50.

Le système d'exploitation polyvalent 20 reçoit grâce à cette étape E102 l'information de lancement du paiement (en pratique, le fait que l'utilisateur a posé son doigt à l'endroit d'affichage du bouton virtuel de paiement) et commande alors à l'étape E103 le lancement (c'est-à-dire l'exécution par le processeur de l'entité électronique sécurisée) d'une application de paiement mémorisée au sein de l'entité électronique sécurisée 40.

L'application de paiement exécutée par le processeur de l'entité électronique sécurisée 40 met en place un processus d'authentification de l'utilisateur.

Pour ce faire, l'application de paiement exécutée dans l'entité électronique sécurisée 40 demande à l'étape E104 la mise en oeuvre d'un service du système d'exploitation de confiance 30. Ce service vise à obtenir de l'utilisateur que celui-ci fournisse, au moyen du périphérique d'entrée de l'interface utilisateur 50 (ici l'écran tactile) des informations d'authentification, par exemple comme expliqué ci-dessus un mot de passe, un code personnel (code PIN) ou des informations biométriques telles qu'une empreinte digitale.

Le service commande par exemple l'affichage sur l'écran tactile 50 d'une indication ou d'un message destiné(e) à l'utilisateur, lui demandant de fournir les informations d'authentification requises (étape d'affichage non représentée en figure 3).

L'utilisateur peut alors fournir les informations d'authentification requises (par une action sur l'écran tactile 50), informations d'authentification qui sont ainsi transmises au système d'exploitation de confiance 30 à l'étape E105.

Le système d'exploitation de confiance 30 transmet alors à l'étape E106 ces informations d'authentification à l'entité électronique sécurisée 40 afin que l'entité électronique sécurisée 40 puisse vérifier ces informations d'authentification, par exemple par comparaison à des données correspondantes mémorisées dans l'entité électronique sécurisée 40.

Si l'entité électronique sécurisée 40 détecte une inexactitude dans les informations d'authentification obtenues de l'utilisateur, le paiement n'est pas finalisé et l'entité électronique sécurisée 40 renvoie par exemple un message d'erreur au système d'exploitation polyvalent 20 (étape non représentée en figure 3).

En revanche, si l'entité électronique sécurisée 40 vérifie l'exactitude des informations d'authentification obtenues de l'utilisateur, l'entité électronique sécurisée 40 prépare un message d'autorisation de la transaction (par exemple un message signé au moyen d'une clé cryptographique mémorisée dans l'entité électronique sécurisée 40) et envoie à l'étape E107 ce message d'autorisation à destination de l'application d'achat en ligne exécutée dans le cadre du système d'exploitation polyvalent 20.

On remarque que l'utilisation du système d'exploitation de confiance 30 au cours des étapes E104 à E106 permet à l'entité électronique sécurisée 40 d'avoir recours aux ressources de l'appareil électronique 10 (ici l'écran tactile 50), ce dans le cadre de l'environnement d'exécution de confiance (ou TEE) créé grâce au système d'exploitation de confiance 30. Les informations obtenues au moyen de ces ressources de l'appareil électronique 10 (ici les informations d'authentification) pourront donc être utilisées par l'application exécutée au sein de l'entité électronique sécurisée 40 (ici l'application de paiement).

Après avoir reçu le message d'autorisation (étape E107 décrite ci-dessus), l'application d'achat en ligne déclenche à l'étape E108 le paiement auprès de la banque en échangeant des données avec le serveur bancaire 70, notamment en transmettant le message d'autorisation (par exemple signé par l'entité électronique sécurisée 40 comme déjà indiqué) au serveur bancaire 70.

Lorsque la transaction s'est bien déroulée au moyen des étapes qui précèdent, l'application d'achat en ligne commande par exemple l'affichage d'une confirmation visuelle destinée à l'utilisateur sur l'écran tactile 50 en faisant appel à des services dédiés du système d'exploitation polyvalent 20 (étape E109).

La figure 4 représente un autre exemple de système dans lequel peut être mise en oeuvre l'invention.

Cet autre système comprend un appareil électronique 80, ici un terminal tel qu'un téléphone intelligent, et un lecteur 90 équipant par exemple un tourniquet d'accès à une zone sécurisée. Pour être autorisé à passer le tourniquet, un utilisateur doit présenter devant le lecteur 90 un appareil électronique, par exemple l'appareil électronique 80, contenant des données d'autorisation.

L'appareil électronique 80 comprend un module de commande 82, un module de communication 88 et une interface homme-machine 84, par exemple un écran tactile.

Le module de commande 82 comprend un processeur, ainsi que des mémoires (par exemple une mémoire vive, une mémoire morte et une mémoire non-volatile réinscriptible), et gère les principales fonctionnalités de l'appareil électronique. En particulier, le module de commande 82 gère l'interface homme-machine 84 : le module de commande 82 peut envoyer des commandes d'affichage sur l'écran tactile 84 et recevoir des informations en provenance de l'écran tactile 84, en particulier la position des doigts de l'utilisateur sur l'écran tactile 84 qui peut (selon l'affichage mis en place sur l'écran tactile 84, par exemple l'affichage d'un bouton virtuel) être interprété comme une instruction particulière de l'utilisateur.

Le module de commande 82 peut fonctionner sur la base d'un système d'exploitation de confiance (c'est-à-dire que les fonctionnalités de base du fonctionnement du module de commande sont réalisées par l'exécution du système d'exploitation de confiance sur le processeur du module de commande 82), ce qui permet de créer un environnement d'exécution de confiance ou TEE.

De manière optionnelle, le module de commande 82 peut également fonctionner sur la base d'un système d'exploitation polyvalent, comme décrit ci-dessus en référence à la figure 1.

Le module de communication 88 est connecté à une antenne 89 et peut ainsi mettre en place une communication sans contact courte portée avec le lecteur 90. Le module de communication 88 est par exemple de type CLF (pour *"ContactLess Frontend*") et permet par exemple la mise en place d'une communication de type NFC (pour *"Near Field Communication*"). Un tel module de communication 88 comprend un processeur ainsi qu'éventuellement des mémoires, par exemple une mémoire vive et une mémoire non-volatile réinscriptible.

Le module de commande 82 et le module de communication 88 sont par exemple reliés par une liaison série ou par un bus.

L'appareil électronique 80 comporte également une entité électronique sécurisée 86, par exemple un circuit intégré sécurisé (ou SE pour *"Secure Element"*), ici un circuit intégré sécurisé soudé sur un circuit imprimé de l'appareil électronique 80 (ou eSE pour *"embedded Secure Element*")*.* En variante, il pourrait s'agir d'une carte à microcircuit (ou UICC pour "Universal *Integrated Circuit Card*") reçue dans l'appareil électronique.

L'entité électronique sécurisée 86 est ici reliée à la fois au module de communication 88 (par exemple au moyen d'un protocole de type SWP pour *"Single Wire Protocol*" ou I2C pour *"Inter Integrated Circuit*") et au module de commande 82 (de même, par exemple au moyen d'un protocole de type SWP ou I2C).

L'entité électronique sécurisée 86 comprend un processeur et des mémoires, par exemple une mémoire vive et une mémoire non-volatile réinscriptible. La mémoire non-volatile réinscriptible mémorise les données d'autorisation (qui permettent comme indiqué ci-dessus le passage de l'utilisateur à travers le tourniquet) ou des données (par exemple cryptographiques) qui permettent à l'entité électronique sécurisée 86 de générer les données d'autorisation attendues par le lecteur 90, comme expliqué plus bas.

Le lecteur 90 comprend un processeur 92 connecté à une antenne 91.

Lorsque l'appareil électronique sont suffisamment proches (par exemple lorsque leurs antennes respectives 89, 91 sont à une distance inférieure à 5 cm), l'antenne 89 de l'appareil électronique 80 est soumise à un champ magnétique généré par le lecteur 90 au moyen de l'antenne 91, ce qui permet un échange de données entre le processeur 92 du lecteur 90 et le processeur du module de communication 88, par exemple conformément à la norme ISO/IEC 14443.

La figure 5 représente un exemple de procédé d'échange de données entre les éléments du système de la figure 4.

On considère que l'utilisateur a approché son terminal 80 du lecteur 90 qui équipe le tourniquet, ce qui provoque comme il vient d'être indiqué la mise en place d'une session de communication entre le module de communication 88 et le processeur 92 du lecteur 90.

Après des étapes d'initialisation de la session (non représentées), le processeur 92 du lecteur 90 transmet à l'étape E202 une commande au module de communication 88, cette commande (par exemple du type SELECT AID) désignant un applet de l'entité électronique sécurisée 86.

Le module de communication 88 transmet à l'étape E203 la commande à l'entité électronique sécurisée 86 ce qui permet l'exécution de l'applet désigné au sein de l'entité électronique sécurisée 86. Toutes les commandes ultérieures seront transmises à l'applet sélectionné.

Avant de préparer les données d'autorisation, l'entité électronique sécurisée 86 va piloter un processus d'authentification de l'utilisateur de l'appareil électronique 80.

Pour ce faire, du fait de l'exécution de l'applet, l'entité électronique sécurisée 86 envoie à l'étape E204 une commande destinée au système d'exploitation de confiance exécuté par le processeur du module de commande 82 afin que l'utilisateur puisse s'authentifier en produisant des informations d'authentification au niveau de l'écran tactile 84 ou d'un autre dispositif d'entrée-sortie de l'appareil électronique, tel qu'un capteur biométrique. Les informations d'authentification sont par exemple un mot de passe ou un code d'identification (code PIN) saisi par l'utilisateur sur un clavier virtuel présenté sur l'écran tactile 84 ; en variante, il peut s'agir de données biométriques obtenues au moyen de l'écran tactile 84 ou du capteur biométrique susmentionné.

Les informations d'authentification présentées par l'utilisateur sont transmises de l'écran tactile 84 (ou en variante d'un autre dispositif d'entrée-sortie) au système d'exploitation de confiance exécuté sur le processeur du module de commande 82 lors d'une étape E205.

Les informations d'authentification sont alors transmises du système d'exploitation de confiance à l'entité électronique sécurisée 86 (étape E206).

L'entité électronique sécurisée 86 vérifie alors que les informations d'authentification correspondent bien à celles de l'utilisateur (par exemple mémorisées dans la mémoire non-volatile de l'entité électronique) et, dans l'affirmative, prépare les données d'autorisation. (Dans la négative, on met naturellement fin au processus sans préparer les données d'autorisation et donc sans autoriser l'accès de l'utilisateur.)

Comme déjà indiqué, ces données d'autorisation peuvent être des données mémorisées dans la mémoire non-volatile de l'entité électronique sécurisée 86 ou des données obtenues par l'entité électronique sécurisée 86, par exemple par application d'une clé cryptographique mémorisée dans la mémoire non-volatile de l'entité électronique sécurisée 86 à des données reçues du lecteur (jointes par exemple à la commande de l'étape E202), par exemple selon la technique du défi-réponse (ou *"challenge-response"* selon l'appellation anglo-saxonne).

L'entité électronique sécurisée 86 peut alors communiquer les données d'autorisation préparées au module de communication 88 (étape E207), le module de communication 88 transmettant ces données d'autorisation au processeur 92 du lecteur 90 (étape E208).

Sur la base des données d'autorisation reçues, le processeur 92 du lecteur 90 autorise l'accès à l'utilisateur en libérant la rotation du tourniquet.

## Revendications

1. Appareil électronique (10 ; 80) comprenant un premier processeur et une entité électronique sécurisée (40 ; 86) équipée d'un second processeur, l'appareil électronique (10; 80) étant conçu pour fonctionner au moyen de l'exécution par le premier processeur d'un système d'exploitation de confiance (30),
**caractérisé en ce qu'**un élément (20 ; 88) situé en dehors de l'entité électronique sécurisée (40 ; 86) et distinct du système d'exploitation de confiance (30) est conçu pour déclencher l'exécution d'une application (42) par le second processeur et **en ce que** l'application exécutée (42) par le second processeur est conçue pour demander la mise en oeuvre d'un service du système d'exploitation de confiance (30).

2. Appareil électronique selon la revendication 1, dans lequel l'élément distinct est un système d'exploitation polyvalent (20) mis en oeuvre au sein de l'appareil électronique.

3. Appareil électronique selon la revendication 2, dans lequel le système d'exploitation polyvalent (20) est conçu pour être exécuté par le premier processeur.

4. Appareil électronique selon la revendication 3, comprenant des moyens de basculement du fonctionnement entre un fonctionnement basé sur le système d'exploitation polyvalent (20) et un fonctionnement basé sur le système d'exploitation de confiance (30).

5. Appareil électronique selon la revendication 2, dans lequel l'appareil électronique comprend un troisième processeur et dans lequel le système d'exploitation polyvalent (20) est conçu pour être exécuté par le troisième processeur.

6. Appareil électronique selon la revendication 1, dans lequel l'élément distinct est un module de communication (88) de l'appareil électronique (80).

7. Appareil électronique selon l'une des revendications 1 à 6, dans lequel l'élément distinct (20 ; 88) est conçu pour commander directement au second processeur le déclenchement de l'exécution de l'application (42).

8. Appareil électronique selon l'une des revendications 1 à 6, dans lequel l'élément distinct (20) est conçu pour émettre une commande de déclenchement de l'exécution de l'application à destination du système d'exploitation de confiance (30) et dans lequel le système d'exploitation de confiance (30) est conçu pour commander l'exécution de l'application (42) par le second processeur.

9. Appareil électronique selon la revendication 8 prise dans la dépendance de la revendication 4, dans lequel les moyens de basculement sont conçus pour basculer du fonctionnement basé sur le système d'exploitation polyvalent (20) au fonctionnement basé sur le système d'exploitation de confiance (30) à l'émission de la commande de déclenchement.

10. Appareil électronique selon l'une des revendications 1 à 9, dans lequel le service inclut la mise en oeuvre d'une fonctionnalité d'un périphérique (50 ; 84) de l'appareil électronique (10 ; 80).

11. Appareil électronique selon la revendication 10, dans lequel le périphérique est une interface homme-machine (50 ; 84) de l'appareil électronique (10 ; 80).

12. Appareil électronique selon l'une des revendications 1 à 9, dans lequel le service inclut un retour d'information sur une interface homme-machine (50 ; 84) de l'appareil électronique (10 ; 80).

13. Appareil électronique selon l'une des revendications 1 à 9, dans lequel le service inclut la réception d'une information d'identification de l'utilisateur.

14. Procédé mis en oeuvre dans un appareil électronique (10; 80) comprenant un premier processeur et une entité électronique sécurisée (40 ; 86) équipée d'un second processeur, l'appareil électronique (10 ; 80) étant conçu pour fonctionner au moyen de l'exécution par le premier processeur d'un système d'exploitation de confiance (30), comprenant les étapes suivantes :
- déclenchement, par un élément situé en dehors de l'entité électronique sécurisée (40 ; 86) et distinct du système d'exploitation de confiance (30), de l'exécution d'une application (42) par le second processeur ;
- demande, par l'application (42) exécutée par le second processeur, de la mise en oeuvre d'un service du système d'exploitation de confiance (30).
